# EUROPEAN PATENT SPECIFICATION

(11) **EP 3 590 317 B1**
(45) Date of publication and mention of the grant of the patent: **30.12.2020**
(21) Application number: 19184119.6
(22) Date of filing: 03.07.2019
(51) Int. Cl.: A01B 39/18, A01B 39/16, A01B 33/02

(54) **AGRICULTURAL MACHINE FOR CLEANING SOILS USED TO GROW ORCHARDS AND VINEYARDS**
LANDWIRTSCHAFTLICHE MASCHINE ZUR BODENBEARBEITUNG VON OBST-UND WEINGÄRTEN
MACHINE AGRICOLE POUR LABOURER LE SOL DE VERGERS ET VIGNOBLES

(30) Priority: 05.07.2018 IT 201800006953
(43) Date of publication of application: 08.01.2020
(73) Proprietor: Torrico S.r.l., 36053 Gambellara (VI) (IT)
(72) Inventor: PEGORARO, Giovanni, 36053 Gambellara (VI) (IT)
(74) Representative: Burchielli, Riccardo

(56) References cited:
- EP-A2- 1 977 638
- DE-A1- 4 201 897
- KR-A- 20130 118 504
- KR-B1- 101 136 593
- MD-B1- 4 426
- US-A1- 2017 172 046

## Description

The present invention generally relates to an agricultural machine for cleaning and weeding weeds which are formed particularly in soils where orchards and vineyards grow.

More particularly, the invention relates to an agricultural machine that allows weeding operations near rows of orchards, in particular vineyards, so as to keep the area clean to the benefit of plantation and finally of quality of the harvested product.

It is known that in agriculture different systems are used so as to remove weeds from several types of plantations, such as fruit trees and, in particular, vineyards.

The known solutions which are normally used to carry out said operations generally use chemical or mechanical herbicides.

However, current regulations require the use of natural and low aggressive products and therefore chemical herbicides can no longer be used, also due to their aggressiveness on the ground, as their diffusion in the soil at the plantation could damage the roots of said plantation, thus making suffering the plants and damaging the harvest.

On the other hand, mechanical herbicides (lawnmowers), even if they actually allow shearing and/or grubbing weeds, nevertheless cause many problems due to the damage inflicted to the plants and to the soil and due to the danger for the user.

Moreover, said mechanical herbicides are extremely complex and expensive and do not perform a complete grass cutting operation, especially in the vineyards, as the operator always has some difficulties in moving the lawnmower between the grapevines.

In fact, the cutting operation is rather difficult both when the grass must be cut along the passages between the rows of vines and when the grass must be cut between the grapevines of the same row.

An agricultural machine having the features contained in the preamble of the attached claim 1 is described in document US 2017/0172046 A1.

On the basis of the above mentioned requirements, it is an object of the present invention to provide an agricultural machine for cleaning soils used to grow orchards and vineyards, which is able to obviate or at least to reduce the drawbacks mentioned above.

Another object of the present invention is to provide an agricultural machine for cleaning soils used to grow orchards and vineyards, which is simple to build and which is able to avoid harmful effects for the orchard and/or the vineyard or dangerous for users and/or for surrounding areas, with respect to the known mechanical herbicides.

Another object of the invention is to provide an agricultural machine for cleaning soils used to grow orchards and vineyards, which avoids the use of chemical herbicides, achieving the same aims and advantages, and configured to easily move on the soil without interfering with the plants (fruit trees and, in particular, grapevines) of a same row even when said plants are put close together.

Advantageously, the agricultural machine according to the invention, in addition to having a significant constructive simplicity and being of simple and easy use, allows to obtain a perfect grubbing of weeds, also avoiding to produce harmful effects for other plants and for the users.

The above objects, as well as other objects which will become more clear hereinafter, are achieved by an agricultural machine for cleaning soils used to grow orchards and vineyards, according to claim 1.

Other detailed features of the agricultural machine according to the present invention are mentioned in the other dependent claims.

Further characteristics and advantages of the invention will become more clear from the description of a preferred but not exclusive embodiment of an agricultural machine for cleaning soils used to grow orchards and vineyards, according to the present invention, and from the attached drawings in which:

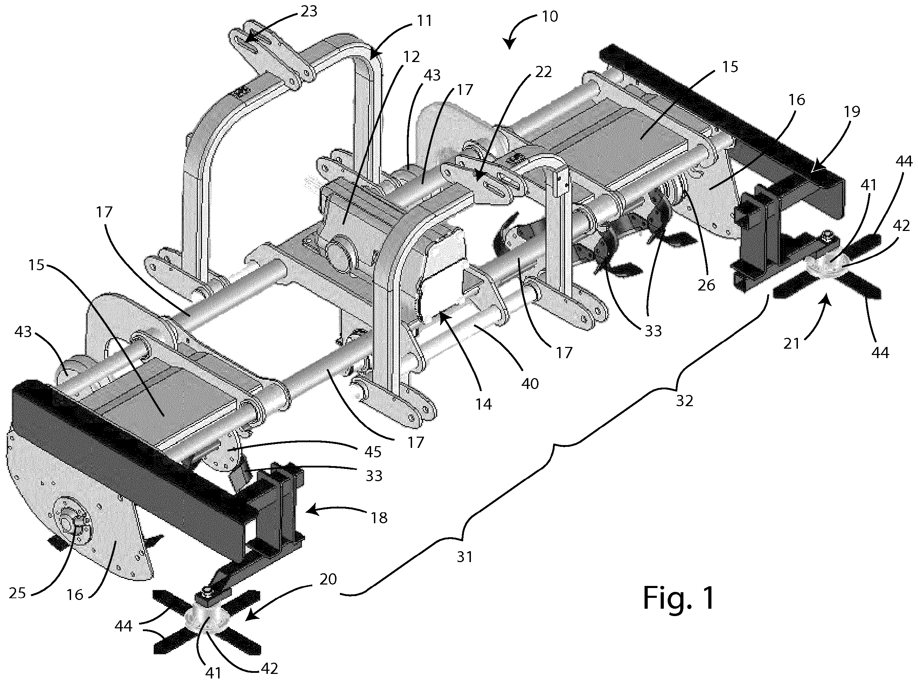

- figure 1 shows a first perspective top view of the agricultural machine for cleaning soils used to grow orchards and vineyards, according to the present invention;

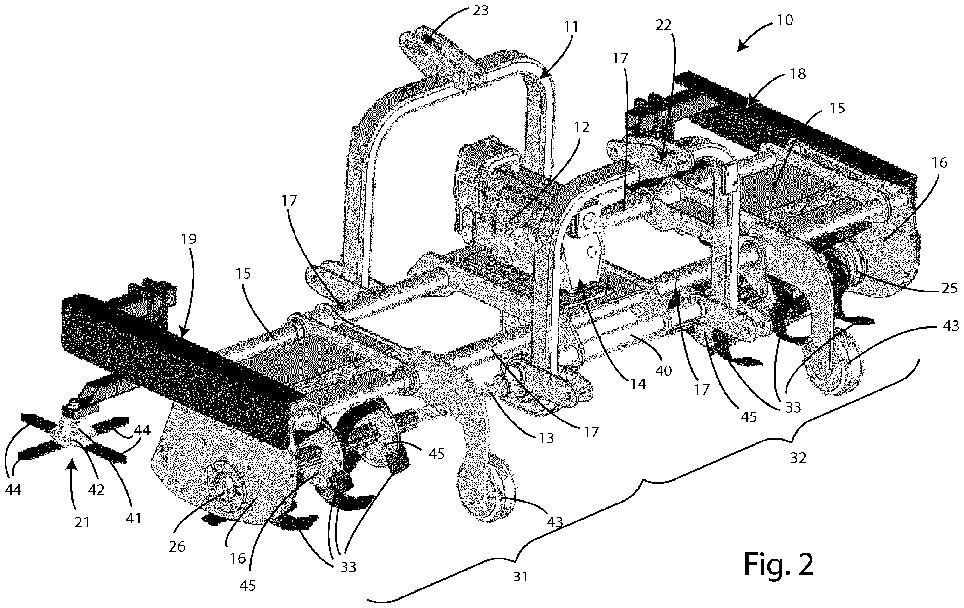

- figure 2 shows a second perspective top view of the agricultural machine of figure 1, according to the present invention;
- figure 3 shows a schematic side view of the agricultural machine, according to the invention.

With reference to the aforementioned figures, 10 generally indicates an agricultural machine for cleaning lands or soils used to grow orchards and vineyards, which preferably comprises:
- a frame 11 configured to be connected to a tractor, not shown, according to a known manner;
- a power connector 12 fixed to the frame 11 and configured to be connected to a power socket of the tractor, according to a known manner;
- at least one rotor shaft 13, which is fixed to the frame 11 in a rotatable manner with respect to an axis of rotation transverse to the direction of advancement of the tractor;
- at least one transmission unit 14, which is fixed to the frame 11 and connected to the power connector 12 to receive power and connected to a median section of the rotor shaft 13 to operate the shaft 13.

By median section we mean a portion of the rotor shaft 13 which is placed in the middle between the two ends of the rotor shaft 13 and, preferably, a portion of the rotor shaft 13 which is at the same distance from said two ends.

In this way the transmission unit 14 actuates the rotor shaft 13 from a central position of the shaft 13, which preferably extends symmetrically from the two sides of the transmission unit 14, so as to obtain a greater rigidity of the agricultural machine 10 with respect to the known agricultural machines in which the rotor shaft is operated from one of its ends.

An agricultural machine 10 according to the present invention in fact allows to obtain a more effective and efficient working of the soil thanks to its own dynamic equilibrium and moreover it is structurally simpler and more durable with respect to the known machines.

In any case, the transmission unit 14 can also be connected to generic portions 31, 32 of the rotor shaft 13 by means of suitable transmissions. According to the present invention, preferably the transmission unit 14 of the agricultural machine 10 has a head assembly provided with a crankcase and a series of toothed wheels connected by gears and conversion members configured to operate the rotor shaft 13 in suitable operating directions.

The rotor shaft 13 preferably comprises a first portion 31 and a second portion 32 and a series of cutters 33, which are mounted on relative disks 45 extending from the first portion 31 and from the second portion 32 to work the soil.

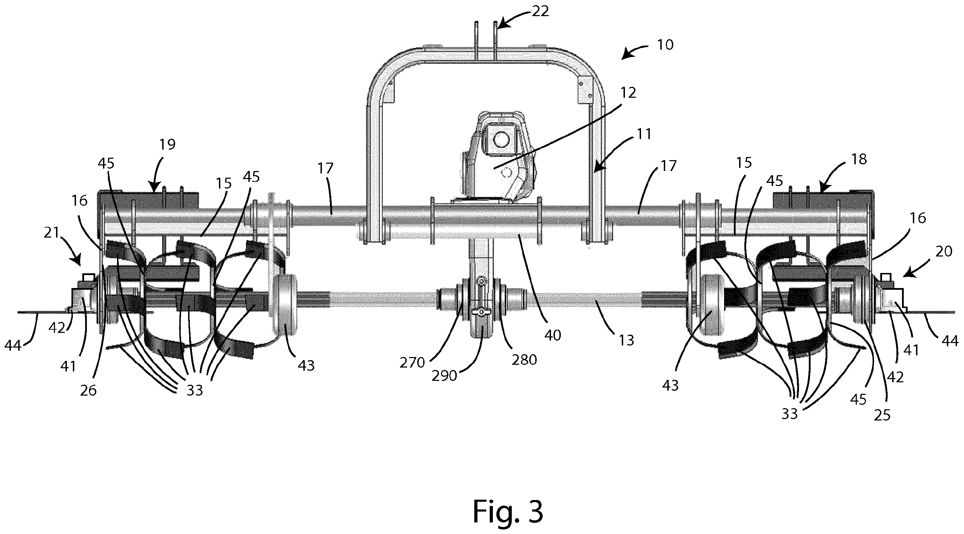

Advantageously, each of the portions 31, 32 has a first terminal 25, 26 connected to a respective side plate 16 and a second terminal 270, 280 located at the transmission unit 14 and preferably located at the center of the agricultural machine 10 (position indicated with the reference number 290 in the attached figure 3), so that the rotor shaft 13 is driven by the transmission unit 14.

Still advantageously, according to the present invention, the frame 11 has at least one telescopic guide 17 and, preferably, one or two pairs of telescopic guides 17, which are connected to respective telescopic portions 15 mounted above the rotor shaft 13 in correspondence with the respective portions 31, 32; the telescopic portions 15 allow the side plates 16 to be translated where said portions 31, 32 of the rotor shaft 13 are connected, so as to compact or enlarge the working area of the cutters 33; a double telescopic frame with a central transmission is thus obtained, wherein two milling elements connected to the rotor shaft 13 are advantageously coupled to each telescopic portion.

Preferably, the work area is between 1.80 and 3 meters and the telescopic portions 15 allow to obtain a double milling machine, which performs an effective cleaning between the plants according to the roughness and/or the narrowness of the soil to be worked; in particular, by using the agricultural machine 10 according to the present invention, it is possible to carry out a single passage between the rows, thus carrying out the whole processing in short times and particularly in an effective manner.

This is achieved by using the modular telescopic portions 15, which have various lengths, in order to adjust, through the sliding of the guides 17, the overall working width.

The use of the cutters 33 also allows the soil around the plant to be kept fresh and therefore the plants suffer less drought with respect to the plants treated with known machines.

Still in a preferred way, shaped supports 18, 19 are fixed to the side plates 16 to support respective tools 20, 21, shaped as a star and provided with rotating peripheral blades 44 with programmed rotation, which are able to finish cleaning without damaging the plants.

In particular, said tools 20, 21 allow to clean and move the soil following the passage of the cutters 33, thus maintaining a greater stability of the agricultural machine 10, with respect to the prior art, even in stony soils where work is more onerous.

Advantageously, the tools 20, 21 are mounted externally to the cutters 33, so as to effect an efficient working on a harder soil with respect to the soil where the cutters 33 work.

In particular, each of said tools 20, 21 has a central shaft 41, to which a disk 42 is rigidly fixed; the disk 42 carries the peripheral blades 44, which are advantageously arranged in directions perpendicular to one another. The blades 44 can also rotate of a given angle, which is preferably less than 90°, with a clockwise and/or an anti-clockwise rotation.

Practically, the central shaft 41, which has at its ends the blades 44, by means of a simple free-release eccentric adjustable by means of a sensor element, allows each blade 44, after having found an obstacle (plant, screw), to spring, thus favoring a quick penetration of the next blade in the soil in a working position.

Specifically, each blade 44, which normally tends to rotate, is blocked due to a certain pressure exerted on the eccentric, whereas, when the sensor detects the presence of the plant, said sensor commands the release of the blades 44, so that a first blade 44, rotating, is able to skip the obstacle and a subsequent blade 44 is able to immediately penetrate into the soil in a working position.

The pressure command exerted on the eccentric allows to obtain a manual safety during the rotation of the blades 44.

Furthermore, advantageously, the agricultural machine 10 according to the invention has a series of sensors suitable to maintain a working width centered with respect to the row being processed and a further sensor, which allows the machine 10 to be compacted and automatically closed, after having provided a suitable command to the telescopic guides 17, once the machining is completed at the end of each row; similarly, at the beginning of the works, it is possible to open the agricultural machine 10, by means of a special command, up to a set working length (the length depends on the type of soil and/or the plant to be treated); therefore, the machine moves to a median position with respect to the row to be treated, through the use of the middle bar 40 which carries two proximity sensors, suitable for laterally detecting the near presence of the plants.

Still advantageously, the agricultural machine 10 according to the invention has a front and/or rear attachment 22, 23 for connecting a tractor and/or a three-point hitch connected to the power connector 12 to receive power from the tractor; in particular, the fact of being able to connect a tractor in front of the agricultural machine 10 allows to use any further agricultural machine (for example, a shredding machine) behind the tractor, with the result of treating the soil more and more effectively.

Still advantageously, the agricultural machine 10 can have a plurality of stabilizing wheels 43.

According to preferred but non-limiting embodiments, the wheels 43 can be adjustable in height, one independently from the others, so as to allow the exclusion of at least one of the cutters 33; this allows the passage of the agricultural machine 10 with at least one of the cutters 33 raised, so as to work the soil only at a side portion (right or left) of the machine 10.

It is therefore understood that an agricultural machine 10 made according to the present invention achieves the intended aims and objects, allowing an easy adaptation of its structure to different functional requirements, simply by changing the configuration of its frame 11.

In this way, it is possible to obtain a good flexibility and effectiveness of the agricultural machine 10, with respect to the known machines, especially for carrying out weeding operations in soils used to grow orchards and/or vineyards.

The invention thus conceived is susceptible of numerous modifications and variations, all of which are within the scope of protection of the appended claims.

Where the features mentioned in the following claims are followed by reference signs or numbers, these reference signs or numbers have been inserted with the sole purpose of increasing the intelligibility of the claims themselves and, consequently, they do not constitute any limitation to the interpretation of each element identified, purely as an example, by said signs or reference numbers.

## Claims

1. Agricultural machine (10) for cleaning soils used to grow orchards or vineyards, comprising:
- a tractor,
- a frame (11) configured to be connected to said tractor,
- a power connector (12) fixed to said frame (11) and configured to be connected to a power taking-off of said tractor,
- at least one rotor shaft (13) fixed to said frame (11) in a rotatable manner with respect to an axis of rotation which, when the machine (10) is in use and connected to said tractor, is transverse to the travel direction of the tractor, said rotor shaft (13) being provided with a series of cutters (33), said cutters (33) being mounted on relative disks (45) extending from a first portion (31) and a second portion (32) of said rotor shaft (13),
- at least one transmission unit (14) fixed to said frame (11) and connected both to said power connector (12) for receiving power and to said at least one rotor shaft (13) to operate said rotor shaft (13),
**characterized in that** said frame (11) has at least one telescopic guide (17), which is connected to a respective telescopic portion (15) mounted above said rotor shaft (13) in correspondence with each of said portions (31, 32) of said rotor shaft (13), said portions (31, 32) of the rotor shaft (13) extending from said transmission unit (14) to respective side plates (16), which are able to translate in order to compact or enlarge the working area of said cutters (33) through the sliding of said at least one telescopic guide (17).

2. Agricultural machine (10) according to claim 1, **characterized in that** said working area is between 1.80 and 3 meters.

3. Agricultural machine (10) according to at least one of the previous claims, **characterized in that** shaped supports (18, 19) are fixed to said side plates (16) so as to support respective tools (20, 21) which are mounted externally to said cutters (33) and which are equipped with rotating peripheral blades (44) configured to clean the soil without damaging the plants.

4. Agricultural machine (10) according to at least one of the previous claims, **characterized in that** said machine (10) has a plurality of wheels (43), each of said wheels (43) being adjustable in height.

5. Agricultural machine (10) according to at least one of the previous claims, **characterized in that** said machine has a series of sensors configured to maintain a working width between said side plates (16) which is centered with respect to the width of a given area of the soil to be worked.

6. Agricultural machine (10) according to at least one of the previous claims, **characterized in that** said machine has a sensor configured to provide a relative command to said telescopic guides (17) for closing the machine at the end of each row and once the processing is completed.

7. Agricultural machine (10) according to at least one of the previous claims, **characterized in that** said machine has a front and/or a rear attachment (22, 23) for connecting said tractor and/or a three-point attachment (24) connected to said power connector (12).

8. Agricultural machine (10) according to at least one of the previous claims, **characterized in that** said rotor shaft (13) extends symmetrically from the two sides of the transmission unit (14).

## Patentansprüche

1. Landwirtschaftliche Maschine (10) zum Reinigen von Böden, die für den Anbau von Obstgärten und Weinhängen verwendet werden, umfassend:
- eine Zugmaschine,
- einen Bügel (11), der dazu ausgelegt ist, an der Zugmaschine angeschlossen zu werden,
- einen Kraftanschluss (12), der an dem Bügel (11) befestigt und dazu ausgelegt ist, an ein Nebengetriebe der Zugmaschine angeschlossen zu werden,
- mindestens eine Rotorwelle (13), die an dem Bügel (11) rotierend in Bezug auf eine Rotationsachse befestigt ist, die, wenn die Maschine (10) im Gebrauch und an die Zugmaschine angeschlossen ist, quer zur Fahrtrichtung der Zugmaschine verläuft, wobei die Rotorwelle (13) mit einer Reihe von Schneiden (33) ausgestattet ist, wobei die Schneiden (33) an jeweiligen Scheiben (45) montiert sind, die sich ausgehend von einem ersten Abschnitt (31) und einem zweiten Abschnitt (32) der Rotorwelle (13) erstrecken,
- mindestens eine Übertragungseinheit (14), die an dem Bügel (11) befestigt und sowohl am Kraftanschluss (12) zum Aufnehmen von Kraft als auch an mindestens eine Rotorwelle (13) zum Antreiben der Rotorwelle (13) angeschlossen ist,
**dadurch gekennzeichnet, dass** der Bügel (11) mindestens eine Teleskopführung (17) aufweist, die an einen entsprechenden Teleskopabschnitt (15) angeschlossen ist, der über der Rotorwelle (13) übereinstimmend mit jedem der Abschnitte (31, 32) der Rotorwelle (13) montiert ist, wobei sich die Abschnitte (31, 32) der Rotorwelle (13) ausgehend von der Übertragungseinheit (14) zu entsprechenden Seitenplatten (16) erstrecken, die translatorisch beweglich sind, damit der Arbeitsbereich der Schneiden (33) verkleinert oder vergrößert werden kann, indem die mindestens eine Teleskopführung (17) verschoben wird.

2. Landwirtschaftliche Maschine (10) nach Anspruch 1, **dadurch gekennzeichnet, dass** der Arbeitsbereich zwischen 1,80 und 3 Meter beträgt.

3. Landwirtschaftliche Maschine (10) nach mindestens einem der vorstehenden Ansprüche, **dadurch gekennzeichnet, dass** Profilträger (18, 19) an den Seitenplatten (16) befestigt sind, so dass sie jeweilige Werkzeuge (20, 21) tragen, die außen an den Schneiden (33) montiert sind und die mit rotierenden peripheren Blättern (44) ausgestattet sind, die dazu ausgelegt sind, den Boden zu reinigen, ohne die Pflanzen zu beschädigen.

4. Landwirtschaftliche Maschine (10) nach mindestens einem der vorstehenden Ansprüche, **dadurch gekennzeichnet, dass** die Maschine (10) eine Vielzahl von Rädern (43) aufweist, wobei jedes der Räder (43) höhenverstellbar ist.

5. Landwirtschaftliche Maschine (10) nach mindestens einem der vorstehenden Ansprüche, **dadurch gekennzeichnet, dass** die Maschine eine Reihe von Sensoren aufweist, die dazu ausgelegt sind, eine Arbeitsbreite zwischen den Seitenplatten (16) beizubehalten, die bezogen auf die Breite eines vorgegebenen Bereiches des zu bearbeitenden Bodens zentriert sind.

6. Landwirtschaftliche Maschine (10) nach mindestens einem der vorstehenden Ansprüche, **dadurch gekennzeichnet, dass** die Maschine einen Sensor aufweist, der dazu ausgelegt ist, einen jeweiligen Befehlt zum Schließen der Maschine am Ende jeder Reihe und nachdem die Bearbeitung abgeschlossen ist an die Teleskopführungen (17) auszugeben.

7. Landwirtschaftliche Maschine (10) nach mindestens einem der vorstehenden Ansprüche, **dadurch gekennzeichnet, dass** die Maschine ein vorderes und/oder ein hinteres Anbauteil (22, 23) zum Anschließen der Zugmaschine und/oder eines Dreipunkt-Anbauteils (24), das an den Kraftanschluss (12) angeschlossen ist, aufweist.

8. Landwirtschaftliche Maschine (10) nach mindestens einem der vorstehenden Ansprüche, **dadurch gekennzeichnet, dass** sich die Rotorwelle (13) symmetrisch ausgehend von den beiden Seiten der Übertragungseinheit (14) erstreckt.

## Revendications

1. Machine agricole (10) pour labourer des sols de vergers ou vignobles, comprenant :
- un tracteur,
- un cadre (11) configuré pour être relié audit tracteur,
- un connecteur électrique (12) fixé audit cadre (11) et configuré pour être relié à une prise de force dudit tracteur,
- au moins un arbre de rotor (13) fixé audit cadre (11) de manière à pouvoir tourner par rapport à un axe de rotation qui, lorsque la machine (10) est utilisée et reliée audit tracteur, est transversal à la direction de déplacement du tracteur, ledit arbre de rotor (13) étant fourni avec une série de couteaux (33), lesdits couteaux (33) étant montés sur des disques relatifs (45) s'étendant d'une première partie (31) et d'une seconde partie (32) dudit arbre de rotor (13),
- au moins une unité de transmission (14) fixée audit cadre (11) et reliée à la fois audit connecteur électrique (12) pour recevoir de l'électricité et audit au moins un arbre de rotor (13) pour actionner ledit arbre de rotor (13),
**caractérisée en ce que** ledit cadre (11) a au moins un guide télescopique (17) qui est relié à une partie télescopique respective (15) montée au-dessus dudit arbre de rotor (13) en correspondance avec chacune desdites parties (31, 32) dudit arbre de rotor (13), lesdites parties (31, 32) de l'arbre de rotor (13) s'étendant de ladite unité de transmission (14) à des plaques latérales respectives (16) qui sont capables de se déplacer afin de réduire ou agrandir la zone de travail desdits couteaux (33) par le glissement dudit au moins un guide télescopique (17).

2. Machine agricole (10) selon la revendication 1, **caractérisée en ce que** ladite zone de travail se situe entre 1,80 et 3 mètres.

3. Machine agricole (10) selon au moins l'une des revendications précédentes, **caractérisée en ce que** des supports mis en forme (18, 19) sont fixés auxdites plaques latérales (16) de façon à supporter des outils respectifs (20,21) qui sont montés sur le plan externe auxdits couteaux (33) et qui sont équipés de lames périphériques rotatives (44) configurées pour labourer le sol sans endommager les plantes.

4. Machine agricole (10) selon au moins l'une des revendications précédentes, **caractérisée en ce que** ladite machine (10) a une pluralité de roues (43), chacune desdites roues (43) pouvant être ajustée en hauteur.

5. Machine agricole (10) selon au moins l'une des revendications précédentes, **caractérisée en ce que** ladite machine a une série de capteurs configurés pour maintenir une largeur de travail entre lesdites plaques latérales (16) qui est centrée par rapport à la largeur d'une zone donnée du sol à travailler.

6. Machine agricole (10) selon au moins l'une des revendications précédentes, **caractérisée en ce que** ladite machine a un capteur configuré pour fournir une commande relative auxdits guides télescopiques (17) pour fermer la machine à la fin de chaque rangée et une fois que le processus est terminé.

7. Machine agricole (10) selon au moins l'une des revendications précédentes, **caractérisée en ce que** ladite machine a une fixation avant et/ou arrière (22, 23) pour relier ledit tracteur et/ou une fixation à trois points (24) reliée audit connecteur électrique (12).

8. Machine agricole (10) selon au moins l'une des revendications précédentes, **caractérisée en ce que** ledit arbre de rotor (13) s'étend symétriquement des deux côtés de l'unité de transmission (14).
